# FASCICULE DE BREVET EUROPEEN

(11) **EP 3 005 795 B1**
(45) Date de publication et mention de la délivrance du brevet: **27.01.2021**
(21) Numéro de dépôt: 14731749.9
(22) Date de dépôt: 28.05.2014
(51) Int. Cl.: H04W 48/18, H04W 4/70, H04W 84/04, H04W 8/18

(54) **PROCÉDÉ DE LOCALISATION D'UN EQUIPEMENT DANS UN RÉSEAU**
VERFAHREN ZUR ORTUNG EINER VORRICHTUNG IN EINEM NETZWERK
METHOD FOR LOCATING A DEVICE IN A NETWORK

(30) Priorité: 31.05.2013 FR 1354978
(43) Date de publication de la demande: 13.04.2016
(73) Titulaire: ORANGE, 75015 Paris (FR)
(72) Inventeur: GRUPELI, Franck, F-14066 Caen Cedex 4 (FR); GIBEAUX, Gilbert, F-94110 Arcueil (FR); ROUSSEL, Jean-Luc, F-14310 Villy-Bocage (FR)
(86) Numéro de dépôt international: PCT/FR2014/051265
(87) Numéro de publication internationale: WO 2014/191687

(56) Documents cités:
- EP-A2- 2 385 714
- WO-A1-2011/041913
- WO-A2-2007/089755
- DE-A1- 19 829 797
- GB-A- 2 473 753
- GB-A- 2 491 392

## Description

La présente invention porte sur un procédé de localisation d'un équipement dans un réseau mobile. Plus précisément, un équipement situé dans une zone de couverture d'un premier réseau d'un premier pays et localisé dans le premier réseau au moyen d'un premier numéro d'identification d'abonné est, en cas d'absence de service normal dans le premier réseau, localisé dans un autre réseau du premier pays au moyen d'un deuxième numéro d'identification d'abonné dans un deuxième réseau d'un deuxième pays, une itinérance d'un abonné du deuxième réseau étant autorisée dans l'autre réseau.

L'invention trouve une application particulièrement intéressante dans le domaine de la communication machine à machine (le terme habituellement utilisé est le terme « M2M », de l'anglais « Machine To Machine »). Une application M2M utilise un réseau mobile d'opérateur pour permettre à un serveur central d'échanger des informations à distance avec des équipements automatiques ou embarqués, pour relever des informations stockées sur ces équipements, ou modifier l'état de ces équipements et ce, sans intervention humaine. A cette fin, un équipement adapté pour collecter des données contient, au même titre qu'un terminal mobile, des données d'identification et d'authentification dans un module de sécurité de type carte "(U)SIM" (de l'anglais "(Universal) Subscriber Identity Module") lui permettant d'accéder au réseau pour transmettre les données collectées via la voie radio. Le module de sécurité constitue une carte d'identité d'abonné dans le réseau mobile, il est délivré par un opérateur lors d'une souscription d'abonnement au réseau. La carte USIM mémorise entre autres un identifiant "IMSI" (pour "International Mobile Subscriber Identity") qui constitue un identifiant international unique d'abonné dans le réseau, et une clé secrète d'authentification, notée Ki, qui sont utilisés au cours d'un processus d'authentification entre le module de sécurité et le réseau.

La technologie M2M est actuellement en plein essor et propose de nombreuses applications. On connaît par exemple des services de collecte de données de consommation ou de débit d'électricité, de gaz, etc., des services de collecte de trafic routier en temps réel à des fins d'analyse et de prévisions, des services dans le domaine de la santé, avec des systèmes adaptés pour détecter des accidents ou des malaises, ou des systèmes d'alertes permettant de mobiliser à bon escient du personnel médical, etc.

Dans le cadre du développement de cette technologie, les services M2M requièrent une fiabilité de plus en plus importante. Ainsi, il devient important que les équipements M2M restent connectés et continuent à transmettre des données, même en cas de défaillance ponctuelle du réseau choisi. Les équipements M2M accèdent au réseau radio d'un opérateur auprès duquel un abonnement a été souscrit et qui a délivré une carte d'identité d'abonné ou carte SIM qui a été insérée dans l'équipement. En cas de défaillance du réseau de l'opérateur, par exemple en cas d'absence de service ou de service restreint où seuls des appels d'urgence sont possibles, l'équipement M2M ne peut alors plus accéder au réseau pour transmettre d'éventuelles données collectées. Actuellement, il n'existe pas de solution permettant de garantir la fiabilité de ces équipements dans le cas d'une défaillance du réseau de l'opérateur choisi.

WO 2011/041913 A1 divulgue un puce de circuit intégré destiné à une télémétrie multiréseaux sans fichier qui stocke une pluralité d'identificateurs d'abonnés correspondant à différents réseaux sans fil. Un des buts de l'invention est de remédier à des insuffisances/inconvénients de l'état de la technique et/ou d'y apporter des améliorations.

A cette fin, l'invention propose un procédé de localisation d'un équipement dans un réseau, l'équipement étant situé dans une zone de couverture d'un premier réseau d'un premier pays, un module de sécurité associé à l'équipement mémorisant un premier numéro d'identification d'abonné dans le premier réseau et au moins un deuxième numéro d'identification d'abonné dans un deuxième réseau d'un deuxième pays, une itinérance d'un abonné du deuxième réseau étant autorisée dans un troisième réseau du premier pays, ledit procédé comprenant les étapes suivantes, mises en œuvre par le module de sécurité :
- réception en provenance de l'équipement d'un événement associé à une mise à jour d'une donnée de localisation de l'équipement dans le premier réseau, ledit événement comprenant la nouvelle donnée de localisation,
- détection, en fonction de la nouvelle donnée de localisation, d'une absence de service normal dans le premier réseau,
- basculement du premier réseau vers le deuxième réseau, ledit basculement déclenchant une localisation de l'équipement au moyen du deuxième numéro d'identification dans le troisième réseau.

Le procédé selon l'invention garantit une meilleure accessibilité de l'équipement au réseau mobile qui peut continuer à émettre des données en utilisant la voie radio même lorsque son réseau nominal, ou premier réseau est défaillant, c'est-à-dire en cas d'absence de service normal, ou lorsque le statut de localisation est « service limité » ou « pas de service ». Pour ce faire, le procédé de l'invention utilise le mécanisme d'itinérance, habituellement utilisé par un équipement mobile qui quitte le premier pays et entre dans le deuxième pays, à un équipement situé dans le premier pays. Le mécanisme d'itinérance est déclenché suite à la détection d'une absence de service normal dans le premier réseau et permet à l'équipement d'emprunter le troisième réseau du premier pays pour continuer à émettre, grâce aux accords d'itinérance conclus entre le deuxième réseau du deuxième pays associé au deuxième numéro d'identification mémorisé dans le module de sécurité et le troisième réseau.

Par ailleurs, le module de sécurité mémorise deux numéros d'identification d'abonné, le premier étant associé au premier réseau du premier pays, et le deuxième étant associé au deuxième réseau du deuxième pays. La mise à jour d'équipements existants afin de mettre en œuvre le procédé de l'invention est ainsi facilitée. En effet, il suffit dans ce cas de remplacer le module de sécurité existant par un module agencé pour mettre en œuvre le procédé de l'invention. Par rapport à des solutions qui consisteraient à intégrer dans l'équipement un deuxième module de sécurité mémorisant le deuxième numéro d'identification, la solution de l'invention permet d'éviter un remplacement, ou des modifications structurelles des équipements. L'économie générée peut être importante.

Avantageusement, l'équipement est un équipement M2M.

L'invention est particulièrement intéressante lorsqu'elle est appliquée à des équipements M2M. En effet, ces équipements sont en général laissés sans surveillance humaine et la gestion automatique de défaillances du premier réseau permet de garantir la continuité du service rendu par les équipements tout en évitant des interventions humaines.

Dans un mode de réalisation, le procédé comprend une étape d'armement d'une première temporisation, l'étape de basculement du premier réseau vers le deuxième réseau étant mise en œuvre à l'expiration de la première temporisation.

L'utilisation de la première temporisation permet de gérer le basculement d'un grand nombre d'équipements lors d'une défaillance du premier réseau. En effet, dans ce cas, les équipements ne basculent pas en même temps du premier vers le deuxième réseau, mais à l'expiration de la temporisation, qui est propre à chacun des modules de sécurité. Cela permet de gérer d'éventuels problèmes de charge lors de l'attachement au deuxième réseau.

Avantageusement, la durée de la première temporisation est générée aléatoirement.

Générer dans chaque équipement la durée de la première temporisation de manière aléatoire permet de faciliter la configuration des équipements. En effet, il n'est ni nécessaire de configurer cette durée dans chacun des modules de sécurité en usine, ni nécessaire de prévoir une procédure OTA pour configurer chacun des modules.

Selon un exemple de réalisation, le procédé comprend :
- une étape de détection que l'état courant du service dans le deuxième réseau est normal,
- une étape d'armement d'une deuxième temporisation,
- une étape de basculement du deuxième réseau vers le premier réseau, mise en œuvre à l'expiration de la deuxième temporisation, l'étape de basculement déclenchant une localisation de l'équipement dans le premier réseau au moyen du premier numéro d'identification.

Le procédé selon l'invention étant destiné à pallier des défaillances ponctuelles du premier réseau, il est prévu un retour dans le premier réseau à l'expiration d'une deuxième temporisation. Ainsi, le temps pendant lequel l'équipement utilise le troisième réseau est limité. De ce fait, les coûts inhérents à l'itinérance sont limités également.

Selon un exemple de réalisation, la deuxième temporisation est générée aléatoirement.

La deuxième temporisation étant aléatoire et propre à chacun des modules de sécurité, un basculement simultané vers le premier réseau de plusieurs équipements est évité. Une fois encore, cela évite tout problème de charge lors de l'attachement au premier réseau.

Selon un exemple de réalisation, le procédé comprend :
- une étape de détection d'une absence de service normal dans le deuxième réseau,
- une étape de basculement du deuxième réseau vers le premier réseau au terme d'un premier délai de basculement.

Dans le cas où, lors du basculement du premier vers le deuxième réseau, l'état courant du service dans le deuxième réseau est limité, le procédé de l'invention prévoit un retour vers le premier réseau.

Avantageusement, le procédé comprend :
- une étape de détection d'absence de service normal dans le premier réseau,
- une étape de basculement du premier réseau vers le deuxième réseau au terme d'un deuxième délai de basculement, supérieur au premier délai de basculement.

Lorsqu'au cours de basculements successifs entre le premier et le deuxième réseau, l'état courant du service dans le premier réseau, respectivement le deuxième réseau est différent de service normal, le procédé prévoit d'augmenter le délai entre deux basculements successifs jusqu'à un délai maximal. Ainsi, des connexions/déconnexions trop fréquentes à chacun des réseaux sont évitées. Cela permet de limiter la charge des deux réseaux qui sont déjà défaillants.

L'invention concerne aussi un module de sécurité associé à un équipement, ledit module étant agencé pour mémoriser un premier numéro d'identification d'abonné dans un premier réseau d'un premier et au moins un deuxième numéro d'identification d'abonné dans un deuxième réseau d'un deuxième pays, une itinérance d'un abonné du deuxième réseau étant autorisée dans un troisième réseau du premier pays, ledit module comprenant :
- des moyens de réception, agencés pour recevoir de l'équipement un événement associé à une mise à jour d'une donnée de localisation de l'équipement dans le premier réseau, ledit événement comprenant la nouvelle donnée de localisation,
- des moyens de détection, agencés pour détecter, en fonction de la nouvelle donnée de localisation, une absence de service normal dans le premier réseau, et
- des moyens de basculement, agencés pour basculer du premier réseau vers le deuxième réseau, ledit basculement déclenchant une localisation de l'équipement au moyen du deuxième numéro d'identification dans le troisième réseau.

L'invention porte également sur un équipement comprenant un module de sécurité selon l'invention.

L'invention concerne également un programme sur un support de données et chargeable dans la mémoire interne d'un module de sécurité, le programme comprenant des instructions de code pour la mise en œuvre des étapes d'un procédé de localisation selon l'une invention, lorsque le programme est exécuté sur ledit module.

L'invention porte aussi sur un support de données sur lequel est enregistré le programme selon l'invention.

D'autres caractéristiques et avantages de la présente invention seront mieux compris de la description et des dessins annexés parmi lesquels :
- la figure 1 présente les étapes d'un procédé de localisation d'un équipement dans un réseau, selon un exemple de réalisation de l'invention ;
- la figure 2 présente les étapes du procédé de localisation dans un cas particulier où l'état du service courant dans le premier et le deuxième réseau est limité ;
- la figure 3 est un schéma bloc fonctionnel d'un module de sécurité selon l'invention.

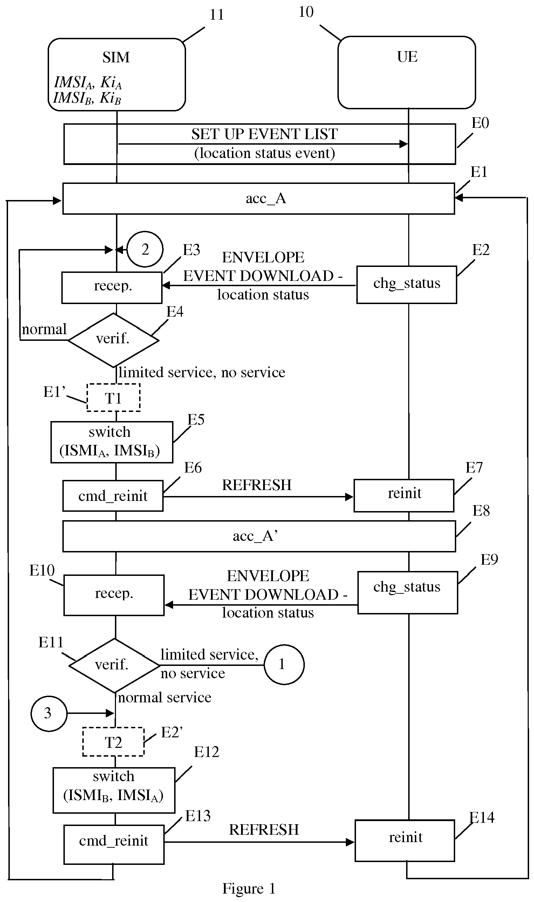

Les étapes d'un procédé de localisation d'un équipement dans un réseau, selon un exemple de réalisation, vont maintenant être décrites en relation avec la figure 1.

Un équipement 10, de type équipement « M2M » (de l'anglais « Machine To Machine »), comprend un module de sécurité 11 agencé pour mémoriser des données opérationnelles d'abonnement à un réseau mobile (non représenté sur la figure 1). De telles données opérationnelles constituent un profil de communication d'abonné. Ainsi, un profil comprend des données de configuration, par exemple des données d'identification et d'authentification d'un abonné auprès d'un réseau telles qu'un numéro d'identification d'abonné, une clé d'authentification et des applications et informations sur des algorithmes utilisés lors de l'accès au réseau. L'équipement 10 est agencé pour accéder au réseau mobile afin de transmettre à un serveur distant (non représenté sur la figure 1) des données collectées localement à des fins d'analyse, de statistiques, de prévisions, etc., conformément à un service donné.

Le module de sécurité est une carte proactive de type « UICC » (de l'anglais « Universal Integrated Circuit Card »), ou « eUICC » (pour « embedded », ou embarquée). Un exemple de telle carte est une carte « (U)SIM » (pour « (Universal) Suscriber Identity Module ») insérée dans un équipement et utilisée en téléphonie mobile. Le module de sécurité 11 est agencé pour mémoriser au moins deux profils d'abonné. Un tel module est qualifié de « dual ».

Le module de sécurité 11 mémorise ainsi dans un premier profil un premier numéro d'identification d'abonné IMSI_{A}, ou numéro «IMSI» (de l'anglais «International Mobile Subscriber Identity ») qui identifie l'abonné de façon unique dans un réseau. Le premier numéro d'identification IMSI_{A} est propre à un réseau d'un premier opérateur A d'un premier pays auprès duquel un abonnement mobile a été souscrit. L'équipement 10 est situé dans une zone de couverture du premier réseau. Ce premier réseau est également appelé « réseau nominal ». Le module de sécurité 11 mémorise par ailleurs, en association avec le numéro d'identification d'abonné IMSI_{A} un ensemble de clés dont une clé d'authentification Ki_{A} et des algorithmes cryptographiques adaptés pour s'authentifier et accéder de manière sécurisée au premier réseau. Le premier profil comprend également des informations propres au premier réseau.

Le module de sécurité 11 est agencé pour mémoriser également un deuxième profil qui comprend un deuxième numéro d'identification d'abonné, noté IMSI_{B}, propre à un réseau d'un deuxième opérateur B, en association avec un ensemble de clés dont une clé d'authentification Ki_{B}, des algorithmes cryptographiques pour s'authentifier et accéder au deuxième réseau, et des informations propres au deuxième réseau. Le deuxième opérateur B est un opérateur d'un deuxième pays, différent du premier pays du premier opérateur A. Le deuxième opérateur B a négocié des accords d'itinérance (« roaming » en anglais) avec d'autres opérateurs du premier pays, par exemple un troisième opérateur du premier pays, noté A', qui gère un troisième réseau.

Il est habituel qu'un opérateur qui gère un abonnement dit nominal conclue des accords de roaming avec des opérateurs étrangers afin que l'abonné puisse continuer à communiquer à l'extérieur de son pays d'origine en utilisant le réseau des opérateurs étrangers avec lesquels les accords ont été contractés. Les accords de roaming entre un premier opérateur d'un premier pays et un deuxième opérateur d'un deuxième pays sont utilisés lorsqu'un abonné du premier réseau qui quitte le premier pays et entre dans le deuxième pays, souhaite accéder dans ce deuxième pays au réseau radio sans s'abonner à un opérateur de réseau de ce deuxième pays. Un tel accord permet ainsi à l'abonné d'emprunter le réseau d'un opérateur du deuxième pays sans manipulation supplémentaire et moyennant une facturation tenant compte de l'accord conclu entre le premier et le deuxième opérateur. Le procédé de l'invention utilise astucieusement de tels accords pour un équipement stationnaire, c'est-à-dire immobile, qui n'est pas destiné à franchir les frontières, dans le but d'emprunter un troisième réseau radio du premier pays, en cas de défaillance du premier réseau.

Dans une étape E0 d'initialisation, le module de sécurité 11, plus précisément une application installée dans le module de sécurité 11 et comprenant des instructions de code pour mettre en œuvre les étapes du procédé selon l'invention, s'abonne auprès de l'équipement 10 à un événement de statut de localisation appelé « location status event » lié à une donnée de localisation de l'équipement. L'événement « location status event » est défini dans les spécifications 3GPP TS 31.111 ou ETSI 102.223. A cette fin, le module de sécurité 11 envoie à l'équipement 10 une commande proactive d'abonnement «SET UP EVENT LIST », qui comprend une liste d'événements à laquelle le module de sécurité 11 souhaite s'abonner. Ici, la liste comprend l'événement de statut de localisation « location status event ». Lorsque l'un des événements de la liste se produit, l'équipement 10 envoie au module de sécurité 11 une information au moyen d'un message appelé « enveloppe » (« ENVELOPE EVENT DOWNLOAD - location status ») qui contient les informations relatives à cet événement. Ainsi, lorsque le module de sécurité 11 s'est abonné à l'événement « location status event », il reçoit systématiquement de l'équipement 10 une enveloppe lorsque la donnée de localisation a changé. L'enveloppe ainsi reçue comprend plusieurs champs :
- un premier champ, correspondant au statut de localisation (ou « location status ») qui comprend l'état courant du service au niveau de l'équipement 10. Ce champ peut prendre les valeurs suivantes : « service normal » (ou « Normal service »), « service limité » (ou « Limited service), ou «pas de service » (ou «No service »). Il est représentatif des capacités de l'équipement 10 à émettre/recevoir sur la voie radio d'un réseau en utilisant un numéro d'identification d'abonné associé à ce réseau,
- un deuxième champ correspondant à une information de localisation (ou « Location information »), présent uniquement si le premier champ est égal à « service normal ». Ce champ fournit des détails sur le réseau, tels que la zone de localisation et la cellule radio qui ont été sélectionnés par l'équipement.

L'étape E0 d'initialisation est exécutée lors d'une première initialisation de l'équipement 10, ou lorsque l'équipement est mis sous tension. Lors de cette initialisation, le premier profil d'abonné qui comprend le numéro d'identification d'abonné IMSI_{A} dans le premier réseau est utilisé pour accéder au premier réseau. Ce premier profil est qualifié de profil actif.

Dans une étape E1 d'accès au premier service, l'équipement 10 s'attache au premier réseau en utilisant les données du premier profil selon une procédure connue, non détaillée ici. L'équipement 10 est ainsi localisé dans le premier réseau au moyen du premier numéro d'identification d'abonné IMSI_{A}.

Dans une étape E2 de détection d'un changement de localisation et d'information, l'équipement 10, plus précisément un émetteur/récepteur de l'équipement 10 qui mesure en permanence la force du signal radio, détecte un changement de la donnée de localisation de l'équipement dans le premier réseau. Le module de sécurité 11 étant abonné à l'événement de statut de localisation « status location event », l'équipement 10 envoie au module de sécurité 11 une enveloppe, « ENVELOPE EVENT DOWNLOAD - Location Status » qui contient la nouvelle donnée de localisation.

Dans une étape E3 de réception et de réveil, le module de sécurité 11 reçoit de l'équipement 10 l'enveloppe «ENVELOPE EVENT DOWNLOAD - Location Status» qui comprend la nouvelle donnée de localisation. L'application du module de sécurité 11 s'étant abonnée à cet événement, elle est réveillée sur réception de cette enveloppe.

Dans une étape E4 de vérification, le module de sécurité 11 vérifie la valeur du champ statut de localisation (« location status ») de la donnée de localisation. Cette valeur peut être égale à « service normal », « service limité » ou «pas de service ». Elle est représentative de l'état courant du service dans le premier réseau.

Dans un premier cas où le statut de localisation est égal à « service normal » (branche « service normal » sur la figure 1), l'équipement 10 s'est attaché correctement au premier réseau et est sous couverture du premier réseau. C'est un mode de fonctionnement attendu de l'équipement 10, qui peut transmettre des données collectées à travers le premier réseau. Dans ce cas, le module de sécurité 11 reste en attente d'un changement de la donnée de localisation comme schématisé avec une flèche sur la figure 1.

Dans un deuxième cas où le statut de localisation est égal à « service limité » ou «pas de service » (branche « limited service, no service » sur la figure 1), l'équipement 10 est dans l'impossibilité de rendre le service et de transmettre d'éventuelles données collectées, conformément à son fonctionnement habituel. Le statut de localisation est égal à « no service » lorsque l'équipement 10 n'arrive pas à s'attacher au premier réseau, ou lorsqu'il y a coupure de la connexion établie lors de l'attachement au premier réseau. Le statut de localisation est égal à « limited service » lorsque l'accès au premier réseau est faible, c'est-à-dire que l'équipement 10 n'a pas accès au mode données, ou lorsqu'il est limité aux appels d'urgence. Dans ce cas, dans une étape suivante E5 de changement de profil, le module de sécurité 11 déclenche un changement de profil d'abonné au niveau du module de sécurité 11. Ce changement est destiné à utiliser les données du deuxième profil, en particulier le deuxième numéro d'identification IMSI_{B} et la deuxième clé d'authentification Ki_{B} associée, pour accéder à la voie radio en empruntant un réseau différent du premier réseau. Le changement est destiné à rendre actif le deuxième profil.

Dans une étape suivante E6 de commande de réinitialisation, une commande de rafraîchissement des données du profil est envoyée par le module de sécurité 11 à l'équipement 10. Cette commande, appelée REFRESH, définie dans les spécifications 3GPP TS 11.14 ou ETSI 102.223 est destinée à informer l'équipement 10 de changements intervenus au niveau du module de sécurité 11.

Dans une étape suivante E7 de réinitialisation, L'équipement 10 exécute une réinitialisation du module de sécurité 11 suite à la réception de la commande. Cette réinitialisation est destinée à prendre en compte les nouvelles données de configuration du module de sécurité 11, en particulier le numéro d'identification IMSI_{B} propre au deuxième réseau et la clé d'authentification associée Ki_{B}. Ainsi, au terme de cette étape, le deuxième profil est le profil actif.

Les étapes E5 de changement de profil, E6 de commande de réinitialisation et E7 de réinitialisation réalisent un basculement du premier réseau vers le deuxième réseau au moyen du deuxième numéro d'identification d'abonné IMSI_{B}.

Dans une étape E8 suivante d'accès au réseau, l'équipement 10 s'attache à un réseau au moyen des données comprises dans le deuxième profil et notamment avec le numéro d'identification IMSI_{B} et la clé d'authentification Ki_{B}. On rappelle que le numéro d'identification IMSI_{B} est propre à un deuxième réseau qui est un réseau étranger et que des accords de roaming ont été conclus entre l'opérateur du deuxième réseau B et l'opérateur d'un troisième réseau A' du premier pays. De manière classique, une procédure d'itinérance non détaillée ici est mise en œuvre. Cette procédure permet à l'équipement 10 d'accéder au troisième réseau A' du premier pays pour transmettre des données de service. Ainsi, le basculement vers le deuxième numéro d'identification IMSI_{B} a déclenché une localisation de l'équipement au moyen du deuxième numéro d'identification IMSI_{B} dans le troisième réseau.

Dans une étape E9 de détection d'un changement de localisation et d'information, comparable à l'étape E2, l'équipement 10 détecte un changement de la donnée de localisation durant l'accès au troisième réseau A'. Le module de sécurité 11 étant abonné à l'événement de statut de localisation, l'équipement 10 envoie au module de sécurité 11 une enveloppe, « ENVELOPE EVENT DOWNLOAD - Location Status » qui contient le nouvelle donnée de localisation.

Dans une étape E10 de réception et de réveil, comparable à l'étape E3, le module de sécurité 11 reçoit de l'équipement 10 l'enveloppe «ENVELOPE EVENT DOWNLOAD - Location Status » qui comprend la nouvelle donnée de localisation. L'application du module de sécurité 11 est réveillée sur réception de cette enveloppe.

Dans une étape E11 de vérification, le module de sécurité 11 vérifie la valeur du champ statut de localisation compris dans la donnée de localisation. Cette valeur peut être égale à « service normal », « service limité » ou « pas de service ».

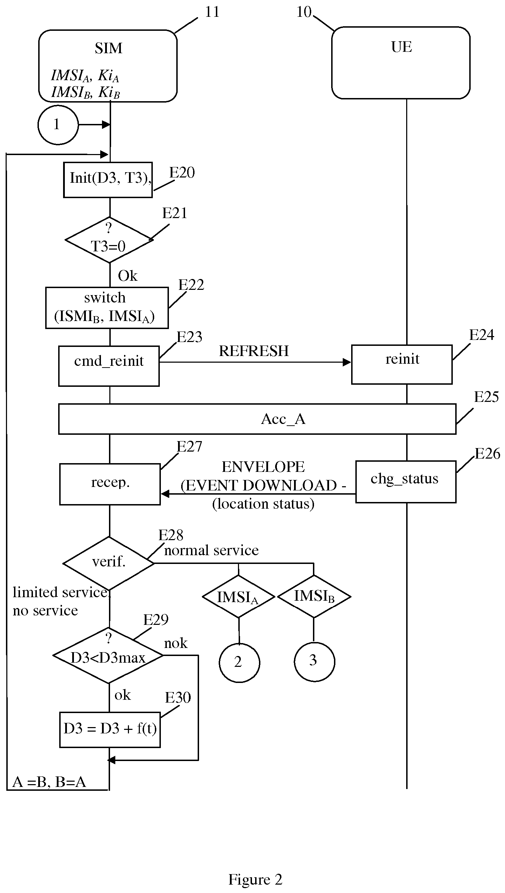

Dans un premier cas où la valeur du statut de localisation est égale à « service normal » (branche « normal service » sur la figure 1), le module de sécurité 11 déclenche, dans une étape E12 de changement de profil, un nouveau changement de profil d'abonné au niveau du module de sécurité 11. Ce nouveau changement est destiné à rendre de nouveau le premier profil actif et à utiliser les données du premier profil, en particulier le numéro d'identification d'abonné IMSI_{A} et les données d'authentification associées, pour accéder à la voie radio en empruntant le premier réseau. Ainsi, il est procédé à un changement au niveau des données de configuration du module de sécurité 11. Pour des raisons de lisibilité, un deuxième cas correspondant à une valeur du statut de localisation égale à « service limité » ou « no service » (branche « limited service, no service » sur la figure 1), et donc à une absence de service normal, est décrit en relation avec la figure 2.

Dans une étape suivante E13 de commande de réinitialisation, comparable à l'étape E6, une commande de rafraîchissement des données du profil est envoyée par le module de sécurité 11 à l'équipement 10. L'équipement 10 exécute dans une étape suivante E14 de réinitialisation, comparable à l'étape E7, une réinitialisation du module de sécurité 11 de manière à prendre en compte les nouvelles données de profil qui sont les données du premier profil. Ainsi, au terme de cette étape le premier profil est le profil actif. Les étapes E12 de changement de profil, E13 de commande de réinitialisation et E14 de réinitialisation réalisent un basculement du deuxième réseau vers le premier réseau au moyen du premier numéro d'identification d'abonné IMSI_{A}. Ce retour vers le premier réseau est destiné à limiter des coûts de roaming, inhérents à l'utilisation du troisième réseau A' par l'équipement 10. Une fois la réinitialisation effectuée, le module de sécurité 11 et l'équipement 10 mettent en œuvre de nouveau l'étape E1 d'accès au premier réseau, comme schématisé sur la figure 1.

Dans un autre exemple de réalisation, lorsque la valeur du statut de localisation vérifiée au cours de l'étape E4 de vérification est égale à « service limité » ou «pas de service », alors dans une étape E1' de déclenchement d'une temporisation (en pointillés sur la figure 1), il est armé une première temporisation T1 destinée à retarder le changement de profil mis en œuvre au cours de l'étape E5, et donc le basculement du premier réseau vers le deuxième réseau. Ainsi, dans cet exemple de réalisation, l'étape E5 de changement de profil est mise en œuvre lorsque la première temporisation T1 expire. Dans un premier exemple de réalisation, la première temporisation T1 est prédéfinie. Elle est par exemple configurée dans le module de sécurité 11 en usine. Dans un autre exemple de réalisation, la première temporisation T1 est configurée après que l'équipement 10 qui comprend le module de sécurité 11 ait été mis en circulation, au moyen d'une procédure «OTA» (de l'anglais «Over The Air ») gérée par l'opérateur du premier réseau. Dans un autre exemple de réalisation, la première temporisation T1 est aléatoire, générée dans le module 10 au moyen d'un générateur pseudo-aléatoire. Cela évite une configuration en usine ou au moyen d'une procédure OTA. La première temporisation T1 est destinée à éviter que plusieurs équipements 10 ne basculent du premier réseau vers le deuxième réseau simultanément.

Dans une variante de réalisation, lorsque la valeur du statut de localisation vérifiée au cours de l'étape E11 de vérification est égale à « service normal », alors dans une étape E2' d'armement d'une temporisation (en pointillés sur la figure 1), il est armé une deuxième temporisation T2, destinée à contrôler le changement de profil mis en œuvre au cours de l'étape E12, puis le basculement du deuxième réseau vers le premier réseau. Ainsi, dans cet exemple de réalisation, l'étape E12 de changement de profil est mise en œuvre lorsque la deuxième temporisation T2 expire. La deuxième temporisation T2 est prédéterminée. Elle est initialisée au cours d'une phase de configuration en usine, ou au moyen d'une procédure OTA, une fois que l'équipement qui comprend le module 10 a été mis en service. Dans un autre exemple de réalisation, la deuxième temporisation T2 est aléatoire, générée dans le module 11 au cours de l'étape E2' au moyen d'un générateur pseudo-aléatoire. Cela évite une configuration en usine ou au moyen d'une procédure OTA. La deuxième temporisation T2 est destinée à à éviter que plusieurs équipements M2M qui mettent en œuvre le procédé de l'invention ne basculent sur le premier réseau simultanément.

Dans une autre variante de réalisation, la deuxième temporisation T2 est variable, croissante jusqu'à une valeur maximale prédéfinie, égale par exemple à vingt quatre heures. Cette variante est intéressante dans des cas de pannes longues du premier réseau. Dans ce cas, les tentatives de basculement du deuxième réseau vers le premier réseau se font à intervalles de temps de plus en plus longs, évitant ainsi des tentatives de connexion trop fréquentes. Elle est également intéressante lorsque l'équipement 10 est situé dans une zone de couverture gérée par un seul opérateur, différent de l'opérateur du premier réseau. De telles zones sont habituellement qualifiées de « zones grises ». Dans ce cas, la deuxième temporisation évite un bagotage permanent entre le premier et le deuxième réseau.

L'utilisation des première et deuxième temporisations T1 et T2 est indépendante et les modes de réalisation qui les concernent peuvent être combinés.

Les étapes du procédé de localisation, lorsque l'état courant du service est différent de service normal après un basculement du premier réseau vers le deuxième réseau, c'est-à-dire lorsque la valeur du statut de localisation est égale à « service limité » ou «pas de service », vont maintenant être décrites en relation avec la figure 2. Ainsi, les étapes décrites ici correspondent au cas particulier où le changement de profil et le basculement du premier réseau vers le deuxième réseau est consécutif à une absence de service normal dans le premier réseau, et où l'état courant du service dans le deuxième réseau correspond également à une absence de service normal. L'équipement 10 est dans l'impossibilité d'émettre des données de service comme attendu. Dans ce cas, le module 11 va tenter ponctuellement de basculer d'un réseau vers un autre.

On rappelle qu'en début de figure 2, le profil actif est le profil associé au deuxième numéro d'identification IMSI_{B}, propre au deuxième réseau.

Dans une étape E20 d'initialisation de données, une troisième temporisation T3 est initialisée à un délai prédéterminé D3.

Lorsque la troisième temporisation T3 expire (branche «Ok» d'une étape E21 de contrôle), le module de sécurité 11 déclenche, dans une étape suivante E22 de changement de profil, un changement de profil d'abonné au niveau du module de sécurité 11. Ainsi, le profil associé au premier numéro d'identification IMSI_{A} devient le profil actif à la place du profil associé au deuxième numéro d'identification IMSI_{B}.

Dans une étape suivante E23 de commande de réinitialisation, comparable aux étapes E6 et E13, une commande de rafraîchissement du numéro d'identification internationale d'abonné et des données d'authentification associées est envoyée par le module de sécurité 11 à l'équipement 10. L'équipement 10 exécute dans une étape suivante E24 de réinitialisation, comparable aux étapes E7 et E14, une réinitialisation du module de sécurité 11 de manière à prendre en compte les nouvelles données de profil, en l'espèce les données associées au premier numéro d'identification IMSI_{A}. Ce basculement est destiné à tenter d'accéder à la voie radio en empruntant le premier réseau. Les étapes E22 de changement de profil, E23 de commande de réinitialisation et E24 de réinitialisation réalisent un basculement du deuxième réseau vers le premier réseau au moyen du premier numéro d'identification d'abonné IMSI_{A}.

Dans une étape E25 d'accès au réseau, l'équipement 10 s'attache au premier réseau au moyen des données associées au numéro d'identification IMSI_{A}.

Dans une étape E26 de détection d'un changement de statut et d'information, comparable aux étapes E2 et E9, l'équipement 10 détecte un changement de la donnée de localisation de l'équipement 10 dans le premier réseau. Cela provoque une mise à jour du statut de localisation. Le module de sécurité 11 étant abonné à l'événement de statut de localisation, l'équipement 10 envoie au module de sécurité 11 une enveloppe, « ENVELOPE EVENT DOWNLOAD - Location Status » qui contient les nouvelles informations de localisation.

Dans une deuxième étape E27 de réception et de réveil, comparable aux étapes E3 et E10, le module de sécurité 11 reçoit de l'équipement 10 l'enveloppe « ENVELOPE EVENT DOWNLOAD - Location Status » qui comprend la nouvelle valeur du statut de localisation.

Dans une étape E28 de vérification, il est vérifié la valeur du statut de localisation.

Dans un premier cas où le statut est égal à « service limité » ou «pas de service » (« limited service, no service » sur la figure 2), le module de sécurité 11 vérifie au cours d'une étape E29 de test si le délai D3 est inférieur à un délai D3max fixé. D3max est par exemple égal à vingt quatre heures.

Si le délai D3 est inférieur à D3max (branche « ok » sur la figure 2), alors le délai D3 est mis à jour au moyen d'une fonction croissante f(x). La nouvelle valeur de D3 est par exemple obtenue au moyen de la formule suivante D3=D3+f(x). On remarque qu'avec cette formule, le délai D3 est croissant jusqu' à D3max.

Si le délai D3 est supérieur ou égal à D3max (branche « nok » sur la figure 2), le délai D3 n'est pas modifié.

Le module de sécurité 11 met alors en œuvre l'étape E20 d'initialisation de la troisième temporisation T3, et de manière similaire les étapes suivantes E21 à E30. On prend soin lors de l'exécution de ces étapes d'inverser dans la figure et dans la description A et B comme décrit sur la figure 2 par « A=B, B=A ».

Ainsi, dans cet exemple de réalisation, lorsque le statut de localisation est « service limité » ou « pas de service » aussi bien dans le réseau nominal que dans le deuxième réseau, le module 11 essaie de s'attacher successivement au premier et au deuxième réseau suivant une période de plus en plus longue, afin d'éviter des déconnexions/reconnexions trop fréquentes.

Dans un deuxième cas où le statut est égal à « service normal » (« normal service » sur la figure 2), le comportement varie selon que le profil actif est celui qui est associé au premier numéro d'identification IMSI_{A} ou au deuxième numéro d'identification IMSI_{B}. Si le profil actif est celui associé au premier numéro IMSI_{A}, alors l'équipement 10 s'est attaché correctement au premier réseau et est sous couverture du premier réseau. C'est le mode de fonctionnement attendu de l'équipement 10. Dans ce cas, le module de sécurité 11 reste en attente d'un changement de la donnée de localisation, ce qui est schématisé par le chiffre 2 qui renvoie à la figure 1. Si le profil actif est celui associé au deuxième numéro d'identification IMSI_{B}, alors le module de sécurité 11 va procéder à un basculement vers le premier numéro d'identification IMSI_{B}, ce qui est schématisé par le chiffre 3 qui renvoie à la figure 1.

L'invention est décrite pour un équipement M2M qui comprend un module de sécurité. L'invention n'est pas limitée à ce genre d'équipement. L'invention s'applique à tout équipement qui comprend un module de sécurité lui permettant d'accéder à un réseau mobile et pour lequel une gestion de défaillance d'un réseau est bienvenue. De tels équipements sont par exemple des équipements d'une passerelle domestique.

Un module de sécurité 11, selon un exemple de réalisation, va maintenant être décrit en relation avec la figure 2.

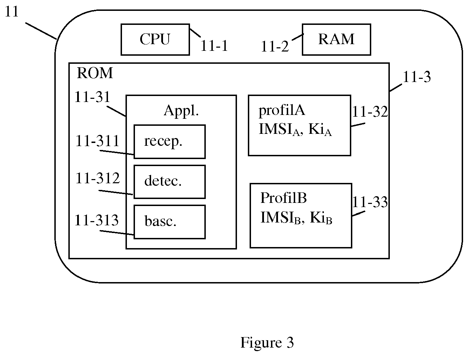

Dans l'exemple de réalisation décrit ici, le module de sécurité 11 est une carte d'identité d'abonné proactive de type USIM, ou eUSIM comprise dans un équipement M2M (non représenté sur la figure 2). Le module de sécurité 11 selon l'invention comprend :
- un microprocesseur 11-1, ou "CPU" (de l'anglais "Central Processing Unit"), destiné à charger des instructions en mémoire, à les exécuter, à effectuer des opérations ;
- un ensemble de mémoires, dont une mémoire volatile 11-2, ou "RAM" (pour "Random Access Memory"), utilisée pour exécuter des instructions de code, stocker des variables, etc., et une mémoire de stockage 11-3 de type « EEPROM » (de l'anglais « Electrically Erasable Programmable Read Only Memory»). La mémoire de stockage 11-3 est agencée pour mémoriser une application 11-31 comprenant des instructions de code pour mettre en œuvre celles des étapes du procédé de localisation selon l'invention qui sont mises en œuvre par le module sécurisé 11. L'application est par exemple une applet téléchargeable et/ou stockée dans la mémoire 11-3. La mémoire de stockage 11-3 est également agencée pour mémoriser au moins un premier profil d'abonné 11-32 et un deuxième profil d'abonné 11-33. Le premier profil 11-31 comprend un premier numéro d'identification d'abonné IMSI_{A} dans le premier réseau et une clé d'authentification Ki_{A} utilisée pour accéder au premier réseau. Le premier profil 11-31 peut comprendre également des algorithmes, des clés OTA et le cas échéant des données propres au premier réseau. Le deuxième profil 11-32 comprend un deuxième numéro d'identification d'abonné IMSI_{B} dans le deuxième réseau et une clé d'authentification Ki_{B}. Le deuxième profil 11-32 peut comprendre également des algorithmes, des clés OTA et le cas échéant des données propres au deuxième réseau. Dans un premier exemple de réalisation, les premier et le deuxième profils sont complètement isolés l'un de l'autre. Dans ce cas, les profils comprennent chacun toutes les données nécessaires pour accéder au réseau. L'activation d'un profil revient à charger le profil correspondant. Dans un autre exemple de réalisation, les deux profils comprennent des données communes, par exemple des algorithmes. L'activation d'un profil revient alors à charger les données nécessaires et propres à chacun des profils. Des données de profils sensibles sont stockées dans des zones sécurisées de la mémoire 11-3, non représentées sur la figure 3.

Le module de sécurité 11 comprend également :
- des moyens 11-311 de réception, agencés pour recevoir en provenance de l'équipement 10 (non représenté sur la figure 3) un événement associé à une mise à jour de la donnée de localisation de l'équipement dans le réseau,
- des moyens 11-312 de détection, agencés pour détecter une absence de service normal dans le réseau. Ici, la détection est réalisée par analyse du champ de statut de localisation « location status » et par vérification que ce champ correspond à la valeur « service limité » ou « pas de service »,
- des moyens 11-313 de basculement, agencés pour basculer d'un réseau vers un autre réseau, le basculement déclenchant une localisation de l'équipement au moyen du numéro d'identification d'abonné associé à l'autre réseau.

Les moyens 11-311 de réception, 11-312 de détection et 11-313 de basculement sont de préférence des modules logiciels comprenant des instructions logicielles pour faire exécuter les étapes du procédé de localisation d'un équipement tel que précédemment décrit.

L'invention concerne donc aussi :
- un programme sur un support de données et chargeable dans la mémoire interne du module de sécurité, le programme comprenant des instructions de code pour la mise en œuvre des étapes du procédé de localisation selon l'invention, lorsque le programme est exécuté par ledit module ;
- un support de données sur lequel est enregistré le programme selon l'invention.

L'invention porte également sur un équipement qui comprend un module de sécurité tel que décrit précédemment.

## Revendications

1. Procédé de localisation d'un équipement (10) dans un réseau, l'équipement étant situé dans une zone de couverture d'un premier réseau, A, d'un premier pays, un module de sécurité (11) associé à l'équipement mémorisant un premier numéro d'identification d'abonné, IMSI_{A}, dans le premier réseau et au moins un deuxième numéro d'identification d'abonné, IMSI_{B}, dans un deuxième réseau, B, d'un deuxième pays, une itinérance d'un abonné du deuxième réseau étant autorisée dans un troisième réseau, A', du premier pays, ledit procédé comprenant les étapes suivantes, mises en œuvre par le module de sécurité :
- réception (E3) en provenance de l'équipement d'un événement associé à une mise à jour d'une donnée de localisation de l'équipement dans le premier réseau, ledit événement comprenant la nouvelle donnée de localisation,
- détection (E4), en fonction de la nouvelle donnée de localisation, d'une absence de service normal dans le premier réseau,
- basculement (E5, E6, E7) du premier réseau vers le deuxième réseau, ledit basculement déclenchant une localisation de l'équipement au moyen du deuxième numéro d'identification dans le troisième réseau.

2. Procédé de localisation selon la revendication 1, dans lequel l'équipement est un équipement M2M.

3. Procédé de localisation selon la revendication 1 ou la revendication 2, comprenant une étape (E1') d'armement d'une première temporisation T1, l'étape de basculement du premier réseau vers le deuxième réseau étant mise en œuvre à l'expiration de la première temporisation.

4. Procédé de localisation selon la revendication 3, dans lequel la durée de la première temporisation est générée aléatoirement.

5. Procédé selon l'une des revendications précédentes, comprenant :
- une étape (E11) de détection que l'état courant du service dans le deuxième réseau est normal,
- une étape (E2') d'armement d'une deuxième temporisation T2,
- une étape (E12) de basculement du deuxième réseau vers le premier réseau, mise en œuvre à l'expiration de la deuxième temporisation, l'étape de basculement déclenchant une localisation de l'équipement dans le premier réseau au moyen du premier numéro d'identification.

6. Procédé selon la revendication 5 dans lequel la deuxième temporisation est générée aléatoirement.

7. Procédé selon la revendication 5, comprenant :
- une étape (E11) de détection d'une absence de service normal dans le deuxième réseau,
- une étape (E22) de basculement du deuxième réseau vers le premier réseau au terme d'un premier délai, D3, de basculement.

8. Procédé selon la revendication 7, comprenant :
- une étape (E28) de détection d'absence de service normal dans le premier réseau,
- une étape (E22) de basculement du premier réseau vers le deuxième réseau au terme d'un deuxième délai de basculement, supérieur au premier délai de basculement.

9. Module de sécurité (11) associé à un équipement (10), ledit module étant agencé pour mémoriser un premier numéro d'identification d'abonné, IMSI_{A}, dans un premier réseau d'un premier pays et au moins un deuxième numéro d'identification d'abonné, IMSI_{B}, dans un deuxième réseau, B, d'un deuxième pays, une itinérance d'un abonné du deuxième réseau étant autorisée dans un troisième réseau, A', du premier pays, ledit module comprenant :
- des moyens (11-311) de réception, agencés pour recevoir de l'équipement un événement associé à une mise à jour d'une donnée de localisation de l'équipement dans le premier réseau, ledit événement comprenant la nouvelle donnée de localisation,
- des moyens (11-312) de détection, agencés pour détecter, en fonction de la nouvelle donnée de localisation, une absence de service normal dans le premier réseau, et
- des moyens (11-313) de basculement, agencés pour basculer du premier réseau vers le deuxième réseau, ledit basculement déclenchant une localisation de l'équipement au moyen du deuxième numéro d'identification dans le troisième réseau.

10. Equipement comprenant un module de sécurité selon la revendication 9.

11. Programme sur un support de données et chargeable dans la mémoire interne d'un module de sécurité, le programme comprenant des instructions de code pour la mise en œuvre, par ledit module, des étapes d'un procédé de localisation selon l'une des revendications 1 à 8, lorsque le programme est exécuté sur ledit module.

12. Support de données sur lequel est enregistré le programme selon la revendication 11.

## Patentansprüche

1. Verfahren zur Lokalisierung eines Geräts (10) in einem Netz, wobei sich das Gerät in einem Abdeckungsbereich eines ersten Netzes, A, eines ersten Landes befindet, wobei ein Sicherheitsmodul (11), das dem Gerät zugeordnet ist, eine erste Teilnehmer-Identifikationsnummer, IMSI_{A}, in dem ersten Netz und mindestens eine zweite Teilnehmer-Identifikationsnummer, IMSI_{B}, in einem zweiten Netz, B, eines zweiten Landes speichert, wobei ein Roaming eines Teilnehmers des zweiten Netzes eines Teilnehmers des zweiten Netzes in einem dritten Netz, A', des ersten Landes gestattet ist, das Verfahren umfassend die folgenden Schritte, die vom Sicherheitsmodul durchgeführt werden:
- Empfangen (E3), von dem Gerät, eines Ereignisses, das einer Aktualisierung eines Datenelements zur Lokalisierung des Geräts in dem ersten Netz zugeordnet ist, wobei das Ereignis das neue Lokalisierungsdatenelement umfasst,
- Feststellen (E4), in Abhängigkeit von dem neuen Lokalisierungsdatenelement, eines Nichtvorhandenseins eines normalen Dienstes in dem ersten Netz,
- Umschalten (E5, E6, E7) vom ersten Netz zum zweiten Netz, wobei das Umschalten eine Lokalisierung des Geräts mittels der zweiten Identifikationsnummer im dritten Netz auslöst.

2. Lokalisierungsverfahren nach Anspruch 1, wobei das Gerät ein M2M-Gerät ist.

3. Lokalisierungsverfahren nach Anspruch 1 oder 2, umfassend einen Schritt (E1') des Aktivierens einer ersten Verzögerung T1, wobei der Schritt des Umschaltens vom ersten Netz zum zweiten Netz bei Ablauf der ersten Verzögerung durchgeführt wird.

4. Lokalisierungsverfahren nach Anspruch 3, wobei die Dauer der ersten Verzögerung zufällig erzeugt wird.

5. Verfahren nach einem der vorhergehenden Ansprüche, umfassend:
- einen Schritt (E11) des Feststellens, dass der aktuelle Zustand des Dienstes im zweiten Netz normal ist,
- einen Schritt (E2') des Aktivierens einer zweiten Verzögerung T2,
- einen Schritt (E12) des Umschaltens vom zweiten Netz zum ersten Netz, der bei Ablauf der zweiten Verzögerung durchgeführt wird, wobei der Schritt des Umschaltens eine Lokalisierung des Geräts in dem ersten Netz mittels der ersten Identifikationsnummer auslöst.

6. Verfahren nach Anspruch 5, wobei die zweite Verzögerung zufällig erzeugt wird.

7. Verfahren nach Anspruch 5, umfassend:
- einen Schritt (E11) des Feststellens eines Nichtvorhandenseins eines normalen Dienstes im zweiten Netz,
- einen Schritt (E22) des Umschaltens vom zweiten Netz zum ersten Netz am Ende einer ersten Umschaltzeitspanne D3.

8. Verfahren nach Anspruch 7, umfassend:
- einen Schritt (E28) des Feststellens des Nichtvorhandenseins eines normalen Dienstes in dem ersten Netz,
- einen Schritt (E22) des Umschaltens vom ersten Netz zum zweiten Netz am Ende einer zweiten Umschaltzeitspanne, die länger als die erste Umschaltzeitspanne ist.

9. Sicherheitsmodul (11), das einem Gerät (10) zugeordnet ist, wobei das Modul angeordnet ist, eine erste Teilnehmer-Identifikationsnummer, IMSI_{A}, in einem ersten Netz eines ersten Landes und mindestens eine zweite Teilnehmer-Identifikationsnummer, IMSI_{B}, in einem zweiten Netz, B, eines zweiten Landes zu speichern, wobei ein Roaming eines Teilnehmers des zweiten Netzes in einem dritten Netz, A', des ersten Landes gestattet ist, das Modul umfassend:
- Empfangsmittel (11-311), die angeordnet sind, von dem Gerät ein Ereignis zu empfangen, das einer Aktualisierung eines Datenelements zur Lokalisierung des Geräts in dem ersten Netz zugeordnet ist, wobei das Ereignis das neue Lokalisierungsdatenelement umfasst,
- Feststellungsmittel (11-312), die angeordnet sind, in Abhängigkeit von dem neuen Lokalisierungsdatenelement ein Nichtvorhandensein eines normalen Dienstes in dem ersten Netz festzustellen, und
- Umschaltmittel (11-313), die angeordnet sind, vom ersten Netz zum zweiten Netz umzuschalten, wobei das Umschalten eine Lokalisierung des Geräts mittels der zweiten Identifikationsnummer im dritten Netz auslöst.

10. Gerät umfassend ein Sicherheitsmodul nach Anspruch 9.

11. Programm, das sich auf einem Datenträger befindet und in den internen Speicher eines Sicherheitsmoduls geladen werden kann, das Programm umfassend Code-Anweisungen für die Durchführung der Schritte eines Lokalisierungsverfahrens nach einem der Ansprüche 1 bis 8 durch das Modul, wenn das Programm auf dem Modul ausgeführt wird.

12. Datenträger, auf dem das Programm nach Anspruch 11 gespeichert ist.

## Claims

1. Method for locating an equipment (10) in a network, the equipment being situated in a coverage zone of a first network, A, of a first country, a security module (11) associated with the equipment storing a first subscriber identification number, IMSI_{A}, for identifying a subscriber in the first network and at least one second subscriber identification number, IMSI_{B}, for identifying a subscriber in a second network, B, of a second country, roaming being authorized, for a subscriber of the second network, in a third network, A', of the first country, said method comprising the following steps, which are implemented by the security module:
- receiving (E3), from the equipment, an event associated with an update of a location datum for locating the equipment in the first network, said event comprising the new location datum,
- detecting (E4), on the basis of the new location datum, an absence of normal service in the first network,
- switching (E5, E6, E7) from the first network to the second network, said switching triggering an operation of locating the equipment, by means of the second identification number, in the third network.

2. Locating method according to Claim 1, wherein the equipment is an M2M equipment.

3. Locating method according to Claim 1 or Claim 2, comprising a step (E1') of starting a first timeout T1, the step of switching from the first network to the second network being implemented when the first timeout expires.

4. Locating method according to Claim 3, wherein the duration of the first timeout is randomly generated.

5. Method according to one of the preceding claims, comprising:
- a step (E11) of detecting that the current state of the service in the second network is normal,
- a step (E2') of starting a second timeout T2,
- a step (E12) of switching from the second network to the first network, which step is implemented when the second timeout expires, the switching step triggering an operation of locating the equipment in the first network by means of the first identification number.

6. Method according to Claim 5, wherein the second timeout is randomly generated.

7. Method according to Claim 5, comprising:
- a step (E11) of detecting an absence of normal service in the second network,
- a step (E22) of switching from the second network to the first network at the end of a first switching delay D3.

8. Method according to Claim 7, comprising:
- a step (E28) of detecting an absence of normal service in the first network,
- a step (E22) of switching from the first network to the second network at the end of a second switching delay, which is longer than the first switching delay.

9. Security module (11) associated with an equipment (10), said module being designed to store a first subscriber identification number, IMSI_{A}, for identifying a subscriber in a first network of a first country and at least one second subscriber identification number, IMSI_{B}, for identifying a subscriber in a second network, B, of a second country, roaming being authorized, for a subscriber of the second network, in a third network, A', of the first country, said module comprising:
- receiving means (11-311), which are designed to receive, from the equipment, an event associated with an update of a location datum for locating the equipment in the first network, said event comprising the new location datum,
- detecting means (11-312), which are designed to detect, on the basis of the new location datum, an absence of normal service in the first network, and
- switching means (11-313), which are designed to switch from the first network to the second network, said switching triggering an operation of locating the equipment, by means of the second identification number, in the third network.

10. Equipment comprising a security module according to Claim 9.

11. Program, which is on a data storage medium and is able to be loaded into the internal memory of a security module, the program comprising code instructions for implementing, by means of said module, the steps of a locating method according to one of Claims 1 to 8 when the program is executed on said module.

12. Data storage medium on which the program according to Claim 11 is recorded.
